# EUROPÄISCHE PATENTANMELDUNG

(11) **EP 2 316 606 A2**
(43) Veröffentlichungstag der Anmeldung: **04.05.2011**
(21) Anmeldenummer: 10189272.7
(22) Anmeldetag: 28.10.2010
(51) Int. Cl.: B23K 26/24, B23K 26/08, B29C 65/74

(54) **Vorrichtung für das Durchstrahlschweißen von Bauteilen über eine ringförmige Kontaktzone**

(30) Priorität: 30.10.2009 DE 102009051672
(71) Anmelder: JENOPTIK Automatisierungstechnik GmbH, 07745 Jena (DE)
(72) Erfinder: Mangols, Thomas, 99087 Erfurt (DE); Krug, Michael, 07747 Jena (DE)
(74) Vertreter: Schaller, Renate

(57) **Zusammenfassung**

Die Erfindung betrifft eine Vorrichtung zum Durchstrahlschweißen zweier Bauteile (1, 2) entlang einer gemeinsam gebildeten, ringförmigen Kontaktzone (4) mittels Laserstrahl (23), wobei eines der beiden Bauteile (1, 2) für den Laserstrahl (23) transmittierend und das andere absorbierend ist, mit einer Aufnahme (3) zum Fixieren des absorbierenden Bauteils (2), einem Innenspannbacken (5) mit wenigstens einer Anlagefläche zum Anlegen an das transmittierende Bauteil (1) innerhalb des freien Innenbereiches der Kontaktzone (4), einem Andruckelement (14) mit einem freien Innenbereich größer der Ausdehnung der Kontaktzone (4), einer einen Laserstrahl (23) aussendenden Laserquelle (16), einer Strahlführungseinheit und einer Strahlführungssteuerung (22), die dadurch gekennzeichnet ist, dass das Andruckelement (14) und der Innenspannbacken (5) mittelbar über ein äußeres Axiallager (13), ein drehbares Halterad (8) und ein inneres Axiallager (6) in Verbindung stehen, wodurch auf das Andruckelement (14) einwirkende Andruckkräfte auf den Innenspannbacken (5) übertragen werden. Die Vorrichtung ist dabei sowohl für die Anwendung des Konturschweißens als auch für das Simultan- und Quasi-Simultanschweißen geeignet.

## Beschreibung

Die Erfindung bezieht sich auf eine Vorrichtung zum Kontur-, Simultan- oder Quasi-Simultanschweißen von Bauteilen nach dem Verfahrensprinzip des Durchstrahlschweißens, wie es gattungsgemäß aus der DE 10 2007 042 739 A1 bekannt ist.

Das Durchstrahlschweißen hat sich für die Verbindung von Bauteilen, insbesondere aus Kunststoffen, als sehr zweckmäßig und effizient herausgestellt. Es beruht auf der gerichteten Aufbringung mindestens eines Laserstrahles auf eine Kontaktzone, in der sich zwei Bauteile berühren, von denen das dem Laserstrahl zugewandte Bauteil für die Wellenlänge des verwendeten Laserstrahls transmittierend ist, während das andere diese Wellenlänge absorbiert. Der Laserstrahl tritt durch das transmittierende Bauteil hindurch, trifft auf die Oberfläche des absorbierenden Bauteils und erwärmt dieses. Bei entsprechender Einwirkdauer und Leistung des Laserstrahls schmilzt die Oberfläche des absorbierenden Bauteils. Durch Wärmeleitung kommt es ebenfalls zum Schmelzen der an die Kontaktzone angrenzenden Bereiche des transmittierenden Bauteils und es entsteht eine Schweißverbindung.

Es ist für die Erreichung hoher und reproduzierbarer Schweißnahtqualitäten von grundlegender Bedeutung, dass die zu verbindenden Bauteile zumindest entlang der zu verschweißenden Bereiche, im Weiteren als Kontaktzone bezeichnet, unter einem vorgegebenen Anpressdruck in engem Kontakt miteinander stehen. Dies ist notwendig, um eine effektive Wärmeleitung zu gewährleisten und um die Maßhaltigkeit des Schweißproduktes zu garantieren, indem ein zunehmender Gegendruck zur aufquellenden Schmelze erzeugt wird.

Ein zentrales Problem ist dabei das Halten und Zusammendrücken der Bauteile an der Kontaktzone, ohne die Einwirkung des Laserstrahls zu behindern. Für den Aufbau eines entsprechenden Anpressdruckes sind eine Reihe von Lösungen bekannt.

Die DE 10 2004 015 250 A1 beschreibt eine Vorrichtung, bei der die Werkstücke (nachfolgend: Bauteile) im Bereich des Schweißvorganges mittels eines Spannfingers gegen eine Spannrolle gedrückt werden. Mit Hilfe dieser Spannvorrichtung können die Bauteile punktuell zusammengepresst werden. Eine Verschweißung durch einen senkrecht auftreffenden Laserstrahl ist dabei jeweils in der Nähe von Spannfinger und Spannrolle möglich. Der über die Oberfläche des einen Bauteils streifende Spannfinger birgt jedoch auch die Gefahr einer Beschädigung dieser.

Um Spannkräfte möglichst senkrecht auf eine Kontaktzone aufbringen zu können und zugleich einen auf die Kontaktzone gerichteten Laserstrahl nicht abzuschatten, offenbart die EP 1 405 713 B1 die wahlweise Verwendung einer transparenten Kugel oder einer transparenten Rolle, die mit Druck über die Oberfläche des aus transmittierendem Material bestehenden Bauteils (hier: des Werkstückes) geführt wird, wodurch die Bauteile unterhalb des Aufsetzpunktes der Kugel bzw. Rolle gegeneinander gepresst werden. Eine Lagefixierung der zu verbindenden Werkstücke kann durch das Einbringen von punktuellen Verschweißungen vor Beginn des eigentlichen Fügevorganges erreicht werden. Durch die Kugel hindurch wird der Laserstrahl geleitet, wobei die Kugel bzw. die Rolle als Fokuslinse wirkt.

Den beiden genannten Lösungen ist gemein, dass eine Anpresskraft nur punktuell auf die Kontaktzone wirkend entlang dieser geführt wird. Dass heißt die Andruckkraft wirkt jeweils nur unmittelbar an dem Ort, an dem der Laserstrahl auftrifft. Diese Vorrichtungen sind daher auch nur zum Konturschweißen geeignet, bei dem die Verschweißung mit dem einmaligen Abtasten der Kontaktzone mittels des Laserstrahls erfolgt.

Die Anwendung effizienter Verfahren wie das Simultanschweißen oder das Quasi-Simultanschweißen, bei denen die gesamte Kontaktzone zeitgleich oder quasi zeitgleich verschweißt wird, ist damit nicht möglich. Das Simultanschweißen und das Quasi-Simultanschweißen bedingen eine Kontaktierung unter Einwirkung von Anpresskräften entlang der gesamten Kontaktzone.

Um eine ringförmige Kontaktzone schweißen zu können ist es zudem nötig, dass sich im Falle der Verwendung eines Laserscanners dieser oberhalb und günstigerweise im Flächenschwerpunkt der ringförmigen Kontaktzone befindet. Aus einer solchen Position heraus kann die Kontaktzone durch den Laserscanner besonders effektiv abgerastert werden.

Vorrichtungen oder deren Teile, die sich ebenfalls oberhalb der Kontaktzone befinden und mit den Bauteilen in Kontakt stehen, können daher den Scanvorgang behindern. Die Verwendung von transmittierenden Materialien, wie z. B. Glasplatten, als Andruckelemente und Durchstrahlen dieser mit dem Laserstrahl birgt das Risiko, dass sich Verunreinigungen in die transmittierenden Materialien einbrennen.

Reicht die Kontaktzone bis an die Ränder der Bauteile heran, eignen sich sogenannte Außenspannvorrichtungen, welche die Bauteile von deren Rändern her mit einer Anpresskraft beaufschlagen, nur sehr bedingt oder können gar nicht angewendet werden. Mögliche Alternativen bestehen in der Verwendung geeigneter Innenspannvorrichtungen.

In der DE 10 2007 042 739 A1 ist eine Spannvorrichtung zum Spannen von zwei Bauteilen offenbart, welche die beiden Bauteile entlang einer gemeinsamen Kontaktzone mit einer Andruckkraft beaufschlagt, um die beiden Bauteile im Durchstrahlschweißverfahren zu verbinden. Bei den beiden Bauteilen handelt es sich hier zum einen um ein quaderförmiges offenes Unterteil und zum anderen, um einen darauf sitzenden, bündig mit den Außenseiten des Unterteils abschließenden Deckel. Die sich berührenden Flächen der beiden Bauteile bilden gemeinsam eine Kontaktzone, die hier eine rechteckige, ebene, geschlossene Ringform aufweist und über welche die beiden Bauteile miteinander verschweißt werden.

Das Problem beim Verschweißen von Kontaktzonen mit einer ebenen, geschlossenen Ringform mittels Laserstrahl besteht insbesondere darin, dass der Laserstrahl und eine erforderliche Andruckkraft aus der gleichen Richtung auf die Bauteile einwirken sollten, wobei die mechanischen Mittel, mit denen eine Andruckkraft auf die Bauteile übertragen wird, den Laserstrahl nicht abschatten darf.

Gemäß der DE 10 2007 042 739 A1 umfasst die Spannvorrichtung eine Aufnahme zur Lagerung des Unterteils, einen Innenspannbacken, der einerseits innerhalb der Kontaktzone am Deckel anliegt und andererseits über die Kontaktzone ragend mit einem Spannkopf (nachfolgend: Andruckelement) in Verbindung steht, dessen freier Innenbereich größer der Kontaktzone ist und von dem aus eine Andruckkraft über den Innenspannbacken auf den Deckel wirkt.

Damit ein von einem Laserschweißkopf kommender Laserstrahl entlang der Kontaktzone auf den Deckel auftreffen kann, ist in den Innenspannbacken ein von Verbindungsstreben unterbrochener umlaufender Schlitz in der Form und Größe der Kontaktzone eingebracht.

Durch eine spezielle Formgestaltung der Verbindungsstreben soll die Abschattung möglichst gering gehalten werden, um eine ausreichend gute Schweißnahtqualität zu gewährleisten. In einer speziellen Ausführung können die Andruckelemente auch aus dem Strahlweg des Laserstrahles ausgeschwenkt werden. Allerdings entstehen durch solche punktuellen Entlastungen ungleiche Spannungsverhältnisse über die Kontaktzone. Prinzipiell dürfte eine Spannvorrichtung gemäß der DE 10 2007 042 739 A1 gleichermaßen für den Einsatz beim Konturschweißen, dem Simultanschweißen und dem Quasi-Simultanschweißen geeignet sein.

Einer Reduzierung der Anzahl und der Breite der Verbindungsstreben, die den Laserstrahl abschatten, ist eine Grenze gesetzt, da diese für eine gleichmäßig verteilte, möglichst vollständige Kraftübertragung auf den Deckel bestimmend sind. Die Verbindungsstreben und damit der gesamte Innendruckstempel muss daher auch aus einem Material mit hoher Biegesteifigkeit sein.

Es liegt auf der Hand, dass eine entstehende Schweißnaht in den Kontaktzonenbereichen unterhalb der Verbindungsstreben, in denen die direkte Einwirkung des Laserstrahls permanent abgeschattet wird, in ihren Eigenschaften von denen der Schweißnaht in den Schlitzbereichen abweicht und somit keine wirklich homogene Schweißnaht entlang der Kontaktzone entstehen kann.

Es ist Aufgabe der Erfindung, eine Vorrichtung zum Durchstrahlschweißen von Bauteilen mittels Laserstrahl entlang einer ringförmigen Kontaktzone zu schaffen, mit der eine definierte Andruckkraft auf die Bauteile aufgebracht werden kann, ohne dass der Laserstrahl örtlich permanent abgeschattet wird.

Als ringförmige Kontaktzone wird im Folgenden jede in sich geschlossene, eine Fläche vollständig umschließende, Ringfläche verstanden, die durch zwei zueinander konzentrisch angeordnete, geschlossene Linien beliebiger Form gebildet wird. Die Ringfläche liegt vorzugsweise in einer Ebene.

Im Folgenden wird von einem Verschweißen der Bauteile durch die Wirkung eines Laserstrahls gesprochen. Die Vorrichtung kann jedoch auch für andere Verbindungsverfahren wie dem Verkleben verwendet werden, bei dem der Laserstrahl lediglich zum Aushärten des Klebers beiträgt. Die Verbindung kann weiterhin durch verschiedene Verfahren der Schweißnahterzeugung wie dem Konturschweißen, dem Simultan- sowie dem Quasi-Simultanschweißen im Durchstrahlverfahren hergestellt werden.

Beim Konturschweißen wird der Verlauf der Kontaktzone, die Kontur, durch einen Laserstrahl nachgezeichnet und dabei fortschreitend verschweißt.

Wird die Kontur über ihre ganze Ausdehnung zur gleichen Zeit durch einen Laserstrahl beaufschlagt und verschweißt, spricht man vom Simultanschweißen.

Fährt ein Laserstrahl die Kontur innerhalb sehr kurzer Zeit mehrmals ab, wird dadurch nahezu gleichzeitig über die gesamte Kontur eine Schmelze erzeugt, was als Quasi-Simultanschweißen bekannt ist.

Die Aufgabe der Erfindung wird für eine Vorrichtung zum Durchstrahlschweißen zweier Bauteile entlang einer gemeinsam gebildeten, ringförmigen Kontaktzone mittels Laserstrahl, wobei eines der beiden Bauteile für den Laserstrahl transmittierend und das andere absorbierend ist, mit einer Aufnahme zum Fixieren des absorbierenden Bauteils, einem Innenspannbacken mit wenigstens einer Anlagefläche zum Anlegen an das transmittierende Bauteil innerhalb des freien Innenbereiches der Kontaktzone, einem Andruckelement mit einem freien Innenbereich größer der Ausdehnung der Kontaktzone, einer einen Laserstrahl aussendenden Laserquelle, einer Strahlführungseinheit und einer Strahlführungssteuerung, dadurch gelöst, dass der Innenspannbacken und das Andruckelement mittelbar über ein inneres Axiallager, ein drehbares Halterad und ein äußeres Axiallager in Verbindung stehen, wodurch auf das Andruckelement einwirkende Andruckkräfte auf den Innenspannbacken übertragen werden.

Der Innenspannbacken kann je nach Anforderung an die gewünschte Krafteinbringung und den Kraftfluss als auch je nach Oberflächengestaltung des transmittierenden Bauteils sowohl vollflächig als auch nur in Teilbereichen innerhalb des freien Innenbereiches der Kontaktzone auf der Oberfläche des transmittierenden Bauteils anliegen.

Die realisierbaren Andruckkräfte bestimmen sich durch die räumliche Gestaltung der Bauteile, insbesondere im Bereich der Kontaktzone, sowie deren Materialeigenschaften wie z.B. Elastizität und Sprödigkeit. Der Innenspannbacken kann aus verschiedenen Materialien wie z. B. Stahl, Kunststoff oder Verbundmaterialien gefertigt sein, die für die Übertragung der notwendigen Kräfte geeignet sind. Es ist weiterhin vorteilhaft, wenn die Anlagefläche des Innenspannbackens mit einem geeigneten Material bedeckt ist, welches eine mechanische Beschädigung der Oberfläche des transmittierenden Bauteils verhindert, aber auch keine Rückstände, z. B. durch Abrieb, auf dieser hinterlässt. Der Innenspannbacken endet jeweils in einem solchen Abstand vor der Kontaktzone, dass dessen Beaufschlagung durch den Laserstrahl von senkrecht oberhalb sowie unter einem Winkel von mehr als 45°, vorzugsweise aber mehr als 75° erfolgen kann.

Form und Abmaße des Innenspannbackens können bauteilspezifisch gestaltet werden. Durch eine an die Bauteile angepasste Konstruktion des Innenspannbackens wird ein Optimum des Kräfteeintrages und des Kraftflusses in den zu verbindenden Bauteilen gewährleistet.

Es ist ein Vorteil der Erfindung, dass gleichzeitig alle anderen Elemente der Vorrichtung bei der Auslegung der Vorrichtung für geometrisch unterschiedliche Bauteile als Gleichteile ausgeführt werden können. Die zu bearbeitenden Bauteile müssen weder rotationssymmetrisch sein, noch während der Bearbeitung gedreht werden.

Das innere Axiallager befindet sich auf der, der Anlagefläche des Innenspannbackens gegenüberliegenden, Fläche. Entlang einer Rotationsachse, die mit der Flächennormalen der Anlagefläche zusammenfällt, ist ein Element vorhanden, welches das innere Axiallager mit dem Halterad verbindet. Ein solches Element kann dabei eine Welle sein. Das innere Axiallager ist vorzugsweise als Spitzenlager ausgebildet.

Es ist für die Anwendung der Erfindung von Vorteil, wenn die Rotationsachse durch den Flächenschwerpunkt des Innenspannbackens verläuft.

Das mit dem Innenspannbacken verbundene innere Axiallager übernimmt mehrere Funktionen. Es hält den Innenspannbacken, stellt eine Verbindung zu dem Halterad her und entkoppelt deren Bewegungen um die Rotationsachse. Beide können sich also unabhängig voneinander mit verschiedenen Drehzahlen, Drehrichtungen und/oder Drehwinkeln um die Rotationsachse bewegen. Ein Kraftfluss zwischen Halterad und Innenspannbacken bleibt dabei möglich.

Das innere Axiallager kann beispielsweise ein drehbar gelagerter Zapfen, Anordnungen von einer oder mehreren Kugeln oder pneumatisch, hydraulisch oder mechanisch gelagerter Bauteile wie z. B. ein Spitzenlager sein. In weiteren Ausgestaltungsmöglichkeiten kann das innere Axiallager auch eine Teilstruktur des Halterades, insbesondere einer Radnabe, sein.

Das Halterad weist vorteilhaft eine Radnabe, einen Radkranz und die Radnabe mit dem Radkranz verbindende Radspeichen auf. Vorzugsweise sind die Radspeichen um einen gleichen Winkel zueinander versetzt.

Die Radspeichen sind aus einem festen, trotzdem zähen Werkstoff gefertigt, der eine hohe Formstabilität bei gleichzeitiger Aufnahme und Weiterleitung von Biegebeanspruchungen sowie von Beschleunigungs- und Zentrifugalkräften zulässt. Zudem darf der Werkstoff durch auftreffende Laserstrahlung nicht oder nur sehr gering in seinen mechanischen Eigenschaften beeinflusst werden. Solche Werkstoffe können beispielsweise Stahl oder Stahllegierungen sein.

Der Radkranz ist so dimensioniert, dass ein Laserstrahl, welcher durch den vom Radkranz umschlossenen Bereich hindurchtritt, alle Stellen der Kontaktzone erreichen kann. In einer bevorzugten Ausführung umschließt der Radkranz einen Bereich, der in der Draufsicht größer als der freie Innenbereich der Kontaktzone ist.

Der Radkranz steht an seiner den Bauteilen abgewandten Fläche mit dem äußeren Axiallager in Verbindung. Das Axiallager ist wiederum an seiner den Bauteilen abgewandten Fläche mit dem Andruckelement verbunden. Das Andruckelement greift über Bereiche des Radkranzes. In einer bevorzugten Ausführung der Erfindung ist das Andruckelement ein U-förmiger Rahmen. Dieser wird durch eine Vorrichtung gehalten und koaxial zur Rotationsachse geführt. Durch die Vorrichtung werden zudem parallel zur Rotationsachse gerichtete Andruckkräfte auf das Andruckelement aufgebracht, die über das äußere Axiallager, das Halterad und das innere Axiallager auf den Innenspannbacken geleitet werden. Das äußere Axiallager ist vorzugsweise als Wälzlager ausgebildet. In einer bevorzugten Ausführung werden durch das äußere Axiallager auch Führungskräfte übertragen, die das Halterad gegen ein Verkippen aus seiner Rotationsebene sichern, trotzdem aber eine steuerbare Bewegung entlang der Rotationsachse erlauben.

Der Radkranz ist weiterhin mit einem Antrieb verbunden, durch den das Halterad in eine Drehung um die Rotationsachse versetzt werden kann. Es ist ein wesentlicher Aspekt der Erfindung, dass das Halterad sowohl mit einer gleichförmigen, einer ungleichförmigen oder aber einer diskontinuierlichen Bewegung, wie z. B. einer schrittweisen Bewegung um die Rotationsachse, rotieren kann. Außerdem kann die Drehrichtung wiederholt geändert werden.

Der Antrieb des Halterades, die Auslenkung des Laserstrahls durch die Strahlführungseinheit und die Bewegung der das Andruckelement haltenden und führenden Vorrichtung werden steuertechnisch geregelt und in solcher Weise aufeinander abgestimmt, dass eine Bearbeitung, insbesondere eine Verschweißung, der Bauteile ermöglicht wird. Dies kann durch eine zentrale Steuerungseinheit oder durch den Elementen zugeordneten und miteinander kommunizierenden, einzelnen Steuerungen erfolgen.

Die Strahlführungseinheit ist mit einer Laserquelle verbunden und kann beispielsweise ein robotergeführter Laserschweißkopf oder ein Laserscanner sein. Sie befindet sich oberhalb des Halterades und richtet einen Laserstrahl auf die Bauteile. Dabei tritt der Laserstrahl durch die Fläche hindurch, die in der Rotationsebene des Halterades liegt und durch den Radkranz begrenzt ist.

Bei der Anwendung des Konturschweißens wird das Halterad um einen solchen Drehwinkel und mit einer solchen Drehzahl bewegt, dass der Laserstrahl zu keinem Zeitpunkt auf eine der Radspeichen trifft. Dieses Vorgehen ist auch beim Quasi-Simultanschweißen dann möglich, wenn Drehzahlen oder Bewegungsabläufe des Halterades realisiert werden können, die einen ständigen, unabgeschatteten Durchtritt des Laserstrahles erlauben.

Um die Position der Radspeichen mit der Position und Bewegung des Laserstrahls zu vergleichen, ist mit dem Halterad vorteilhaft eine Steuerung verbunden, mittels der die augenblickliche Lage der Radspeichen festgestellt und über einen Antrieb verändert werden kann. Diese Daten werden zusammen mit Informationen zur räumlichen Ausdehnung der Kontaktzone, dem Verlauf des Laserstrahls sowie dessen momentaner Ausrichtung in einer geeigneten Form abgespeichert und zum Zwecke der Steuerung miteinander verglichen. Die Bewegungen des Halterades und des Laserstrahls korrespondieren zueinander.

Werden dagegen die Verfahren des Simultanschweißens oder des Quasi-Simultanschweißens angewendet, hat es sich als äußerst vorteilhaft erwiesen, wenn das Halterad mit einer vorgegebenen Drehzahl frei durchrotiert. Die Radspeichen werden dabei nur für vernachlässigbar kurze Zeit vom Laserstrahl getroffen. Ein in Strahlrichtung darunter liegender Bereich der Kontaktzone wird daher nur äußerst kurzzeitig abgeschattet. Es ist von ganz besonderem Vorteil für diese Anwendungsform, wenn die Drehzahl des Halterades und der Verlauf des Scanvorganges zueinander nicht korrespondieren. Eine ausreichend große Phasenverschiebung oder ein zufälliges Verhältnis der beiden Bewegungen zueinander stellt sicher, dass die Radspeichen nur sehr kurz und vor allem in ständig wechselnden Winkellagen von dem Laserstrahl getroffen werden. Damit wird erreicht, dass alle Bereiche der Kontaktzone im zeitlichen Mittel gleichmäßig durch den Laserstrahl beaufschlagt werden und eine homogene Schweißnahtbildung gewährleistet wird.

Sollen Bauteile mittels der erfindungsgemäßen Vorrichtung verschweißt werden, werden diese zueinander in einer Aufnahme positioniert und durch den Innenspannbacken innerhalb des freien Innenbereiches der Kontaktzone gegeneinander gedrückt. Das rotierende Halterad wird koaxial über das äußere Axiallager durch ein Andruckelement mit einer Andruckkraft in Richtung der Bauteile belastet. Die Andruckkraft wird über die Radspeichen zur Nabe des Halterades und weiter über das innere Axiallager und den Innenspannbacken auf die Bauteile geleitet.

Der Verlauf der Kräfte in den Bauteilen hängt von deren Geometrie ab. Insbesondere bei leicht nach außen gewölbten, konvexen Oberflächen des transmittierenden Bauteils werden die Kräfte in Richtung der Kontaktzone gelenkt und beide Bauteile dort gegeneinander gepresst. Plane oder konkav geformte Bauteile eignen sich für die Anwendung ebenfalls, allerdings sollten sich diese bei Aufbringen der Andruckkraft nicht nennenswert durchbiegen.

Je nach gewähltem Schweißverfahren erfolgt die Ansteuerung des Radkranzes so, dass der Laserstrahl durch die Radspeichen nicht oder nur während sehr kurzer Zeitspannen und unter sich ständig ändernden Winkellagen unterbrochen wird. Der Laserstrahl durchdringt das transmittierende Bauteil und trifft auf die Kontaktzone, an der die beiden Bauteile durch die Wirkung der erfindungsgemäßen Vorrichtung aufeinander gedrückt werden. Die Laserstrahlung wird in den oberen Schichten des absorbierenden Bauteils in Wärme umgewandelt und schmilzt diese auf. Durch Wärmeleitung werden auch Schichten des transmittierenden Bauteils aufgeschmolzen. Nach Beendigung des Energieeintrages und Erstarren der Schmelze sind beide Bauteile miteinander verbunden. Der Anpressdruck sorgt dabei für einen Ausgleich etwaig bestehender Fertigungstoleranzen und damit für eine sichere Verbindung.

Die erfindungsgemäße Vorrichtung wird durch die nachfolgenden Ausführungsbeispiele und Zeichnungen näher beschrieben. Dabei zeigen die Zeichnungen:

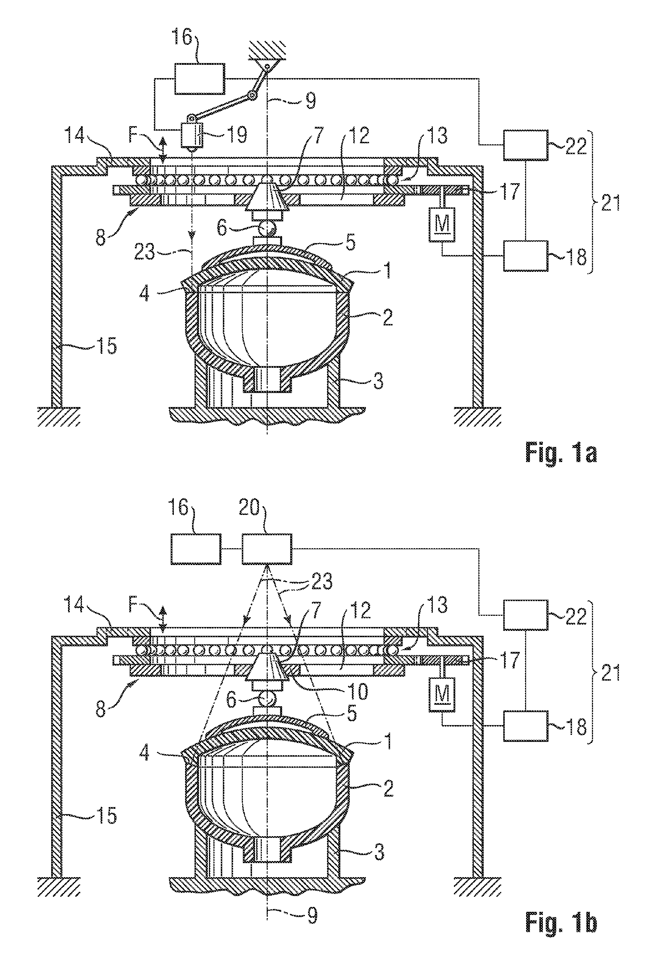

- Fig. 1a: eine schematische Darstellung einer erfindungsgemäßen Vorrichtung in einer Seitenansicht mit einem robotergeführten Laserschweißkopf,

- Fig. 1 b: eine schematische Darstellung einer erfindungsgemäßen Vorrichtung in einer Seitenansicht mit einem Laserscanner,
- Fig. 2: eine schematische Darstellung der erfindungsgemäßen Vorrichtung in der Draufsicht.

In einem ersten Ausführungsbeispiel befindet sich gemäß Fig. 1a ein für den verwendeten Laserstrahl 23 absorbierendes Bauteil 2 in einer Aufnahme 3. Auf dem absorbierenden Bauteil 2 ist ein für den Laserstrahl 23 transmittierendes Bauteil 1 so aufgesetzt, dass sich beide Bauteile 1, 2 entlang einer in sich geschlossenen, ringförmigen und in einer horizontalen Ebene liegenden Kontaktzone 4 berühren. Innerhalb des freien Innenbereiches der Kontaktzone 4 liegt ein Innenspannbacken 5 auf der nach oben gerichteten Oberfläche des transmittierenden Bauteils 1 mit einer Anlagefläche auf. Auf der, der Anlagefläche des Innenspannbackens 5 gegenüberliegenden, Fläche ist ein inneres Axiallager 6 angeordnet, welches als Spitzenlager ausgebildet ist. Das innere Axiallager 6 steht mit einer Welle 7, die im Ausführungsbeispiel als konusförmige Nabe eines Halterades 8 ausgeführt ist, so in Verbindung, dass die Rotationsachse 9 der Welle 7 und die Flächennormale der, der Anlagefläche des Innenspannbackens 5 gegenüberliegenden, Fläche zusammenfallen. Die Rotationsachse 9 steht dabei senkrecht über dem Flächenschwerpunkt des Innenspannbackens 5.

In weiteren Ausführungen kann die Welle 7 auch zylindrisch oder mit einem anderen Querschnitt gestaltet sein. Sie muss zudem nicht zwingend Bestandteil des Halterades 8, sondern kann auch ein eigenständiges Element sein.

Es liegt ebenfalls im Rahmen der Erfindung, wenn die Ebenen, in denen die Kontaktzone 4 bzw. der Radkranz 12 liegen, nicht parallel, sondern in einem Winkel zueinander stehen.

An der von den Bauteilen 1, 2 wegweisenden Fläche des Radkranzes 12 liegt ein äußeres Axiallager 13 an, welches über ein U-förmiges Andruckelement 14 mit zwei das Andruckelement 14 haltenden Säulen 15 verbunden ist. Der Umfang des Radkranzes 12 steht über einen Antrieb 17 mit einer Antriebssteuerung 18 in Verbindung. Oberhalb des Halterades 8 ist ein robotergeführter Laserschweißkopf 19 als Strahlführungseinheit angeordnet, der mit einer Strahlführungssteuerung 22 und mit einer Laserquelle 16 verbunden ist. Der von dem robotergeführten Laserschweißkopf 19 ausgesendete Laserstrahl 23 wird entlang der Kontaktzone 4 geführt. Die Antriebssteuerung 18 und die Strahlführungssteuerung 22 kommunizieren miteinander und bilden gemeinsam die Steuerung 21 der erfindungsgemäßen Vorrichtung.

Natürlich können in weiteren Ausführungen der Erfindung auch nur eine oder aber eine Mehrzahl von Strahlführungseinheiten vorhanden sein, womit gleichzeitig mehrere Laserstrahlen 23 über die Kontaktzone 4 geführt werden.

In einem zweiten Ausführungsbeispiel, gemäß Fig. 1 b, wird die Strahlführungseinheit durch einen Laserscanner 20 gebildet, der auf der Rotationsachse 9 angeordnet ist. Ansonsten entspricht dieses Ausführungsbeispiel dem in der Fig. 1a dargestellten.

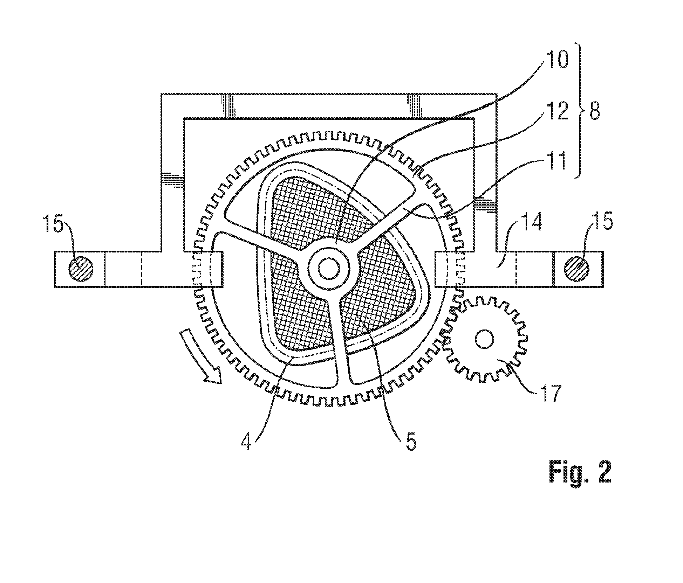

Fig. 2 zeigt eine Draufsicht auf eine Vorrichtung gemäß dem ersten und zweiten Ausführungsbeispiel. Der besseren Übersichtlichkeit halber wurde hier auf die Darstellung der Strahlführungseinheit, die im ersten Ausführungsbeispiel ein robotergesteuerter Laserschweißkopf 19 und im zweiten Ausführungsbeispiel ein Laserscanner 20 ist, sowie auf das äußere Axiallager 13 verzichtet.

Das Halterad 8 ist durch eine Radnabe 10, drei in einem Winkel von je 120° zueinander versetzte Radspeichen 11 und einen Radkranz 12 gebildet. Die Umfangsfläche des Radkranzes 12 ist in Übereinstimmung mit einem zum Antrieb 17 gehörenden Abtriebsrad so ausgebildet, dass der Radkranz 12 und das Abtriebsrad direkt, z. B. über ineinandergreifende Zähne, oder indirekt, z. B. über einen Keilriemen, in Verbindung stehen, um die Drehbewegung des Antriebes 17 auf das Halterad 8 möglichst schlupffrei zu übertragen.

Gemäß den beiden beschriebenen Ausführungsbeispielen ist das Andruckelement 14 als U-förmiger Rahmen ausgebildet und steht an zwei sich gegenüberliegenden Stellen mit dem äußeren Axiallager 13 (in Fig. 2 nicht dargestellt) in Verbindung.

Die Andruckkraft kann entweder allein durch die Gewichtskraft des Andruckelementes 14 bewirkt werden oder sie wird durch eine Verspannung zwischen dem

Andruckelement 14 und dem äußeren Axiallager 13 erreicht. Die Spannkraft der Verspannung, und damit die Andruckkraft, kann eingestellt werden, indem das Andruckelement 14 höhenverändert an den Säulen 15 befestigt ist, die zur Aufnahme 3 in einer festen Lagebeziehung stehen.

Da bei einer üblichen Anordnung des Laserscanners 20 gemäß Fig. 1 b der von diesem ausgesendete Laserstrahl 23 die Kontaktzone 4 unter einem Winkel < 90° trifft, können die Bauteile 1, 2 so gestaltet sein, dass die Kontaktzone 4 entsprechend schräg angestellt ist, so dass der Laserstrahl 23 etwa senkrecht auf die Kontaktzone 4 auftrifft. Bei einer solchen Schrägstellung werden zudem die durch den Innenspannbacken 5 nach außen gelenkten Andruckkräfte weitestgehend senkrecht auf die Kontaktzone 4 geleitet.

Die Vorrichtung kann sowohl für das Verfahren des Konturschweißens als auch für das Simultanschweißen und Quasi-Simultanschweißen verwendet werden. Auf die zu verbindenden Bauteile 1, 2 können hohe Andruckkräfte über einen auf die Geometrie und Oberflächenbeschaffenheit der Bauteile 1, 2 angepassten Innenspannbacken 5 aufgebracht werden. Die zu verschweißende Kontaktzone 4 wird durch die Ausbildung der Vorrichtung als Innenspannvorrichtung, bei der Abschattungen des Laserstrahles 23 nur äußerst kurzzeitig und unter ständig wechselnden Winkellagen erfolgen, nicht permanent überdeckt. Dadurch wird die Ausbildung homogener Schweißverbindungen ermöglicht. Alle Elemente der Vorrichtung bestehen aus gegenüber Laserstrahlung verschleißfreien Materialien und sind, ausgenommen des für einen Typ von Bauteilen 1, 2 spezifisch gestalteten Innenspannbackens 5, wiederholt als Gleichteile einsetzbar. Der Strahlengang des Laserstrahles 23 ist frei von Glas oder anderen, durch die Wirkung der Laserstrahlung in ihren Eigenschaften negativ beeinflussbaren Elementen oder Materialien. Weiterhin erlaubt die erfindungsgemäße Vorrichtung die Verschweißung von nicht rotationssymmetrischen Bauteilen 1, 2, die zudem während des Schweißvorganges auch nicht gedreht werden müssen. Die Vorrichtung kann für die Herstellung von aus mehreren Komponenten zusammengesetzten Kunststoffkörpern, beispielsweise im Bereich der Kfz-Zulieferer, angewendet werden.

### Bezugszeichenliste

- 1: transmittierendes Bauteil
- 2: absorbierendes Bauteil
- 3: Aufnahme
- 4: Kontaktzone
- 5: Innenspannbacken
- 6: inneres Axiallager
- 7: Welle
- 8: Halterad
- 9: Rotationsachse
- 10: Radnabe
- 11: Radspeiche
- 12: Radkranz
- 13: äußeres Axiallager
- 14: Andruckelement
- 15: Säule
- 16: Laserquelle
- 17: Antrieb
- 18: Antriebssteuerung
- 19: robotergeführter Laserschweißkopf
- 20: Laserscanner
- 21: Steuerung
- 22: Strahlführungssteuerung
- 23: Laserstrahl

## Patentansprüche

1. Vorrichtung zum Durchstrahlschweißen zweier Bauteile (1, 2) entlang einer gemeinsam gebildeten, ringförmigen Kontaktzone (4) mittels Laserstrahl (23), wobei eines der beiden Bauteile (1, 2) für den Laserstrahl (23) transmittierend und das andere absorbierend ist, mit einer Aufnahme (3) zum Fixieren des absorbierenden Bauteils (2), einem Innenspannbacken (5) mit wenigstens einer Anlagefläche zum Anlegen an das transmittierende Bauteil (1) innerhalb des freien Innenbereiches der Kontaktzone (4), einem Andruckelement (14) mit einem freien Innenbereich größer der Ausdehnung der Kontaktzone (4), einer einen Laserstrahl (23) aussendenden Laserquelle (16), einer Strahlführungseinheit und einer Strahlführungssteuerung (22), **dadurch gekennzeichnet,**
**dass** das Andruckelement (14) und der Innenspannbacken (5) mittelbar über ein äußeres Axiallager (13), ein drehbares Halterad (8) und ein inneres Axiallager (6) in Verbindung stehen, wodurch auf das Andruckelement (14) einwirkende Andruckkräfte auf den Innenspannbacken (5) übertragen werden.

2. Vorrichtung nach Anspruch 1, **dadurch gekennzeichnet,**
**dass** das Halterad (8) eine Radnabe (10), einen Radkranz (12) und eine Vielzahl von, die Radnabe (10) mit dem Radkranz (12) verbindenden, Radspeichen (11) aufweist.

3. Vorrichtung nach Anspruch 2, **dadurch gekennzeichnet,**
**dass** der freie Innenbereich des Radkranzes (12) in der Draufsicht größer ist als der freie Innenbereich der Kontaktzone (4), sodass die Kontaktzone (4) nur von den Radspeichen (11) überdeckt wird.

4. Vorrichtung nach Anspruch 3, **dadurch gekennzeichnet,**
**dass** die Radnabe (10) auf einer Welle (7) fixiert ist, die über das innere Axiallager (6) mit einer der Anlagefläche des Innenspannbackens (5) gegenüberliegenden Fläche so in Verbindung steht, dass eine Rotationsachse (9) der Welle (7) und die Flächennormale der Fläche zusammenfallen.

5. Vorrichtung nach Anspruch 4, **dadurch gekennzeichnet,**
**dass** die Rotationsachse (9) durch den Flächenschwerpunkt der Anlagefläche des Innenspannbackens (5) gelegt ist.

6. Vorrichtung nach Anspruch 5, **dadurch gekennzeichnet,**
**dass** der Radkranz (12) über das äußere Axiallager (13) mit dem Andruckelement (14) und über seinen Umfang mit einem Antrieb (17) in Verbindung steht und eine mit dem Antrieb (17) verbundene Antriebssteuerung (18) vorhanden ist.

7. Vorrichtung nach Anspruch 6, **dadurch gekennzeichnet,**
**dass** die Antriebssteuerung (18) mit der Strahlführungssteuerung (22) in Verbindung steht, um die Bewegungen von dem Laserstrahl (23) und dem Halterad (8) aufeinander abstimmen zu können.

8. Vorrichtung nach Anspruch 1, **dadurch gekennzeichnet,**
**dass** das innere Axiallager (6) ein Spitzenlager und das äußere Axiallager (13) ein Wälzlager ist.

9. Vorrichtung nach Anspruch 1, **dadurch gekennzeichnet,**
**dass** das Andruckelement (14) ein U-förmiger Rahmen ist, der in einer Vorrichtung gehalten und koaxial zur Rotationsachse (9) geführt ist.

10. Vorrichtung nach Anspruch 1, **dadurch gekennzeichnet,**
**dass** die Strahlführungseinheit ein robotergeführter Laserschweißkopf (19) ist.

11. Vorrichtung nach Anspruch 1 **dadurch gekennzeichnet,**
**dass** die Strahlführungseinheit ein Laserscanner (20) ist.

12. Vorrichtung nach Anspruch 1, **dadurch gekennzeichnet,**
**dass** die Andruckkraft die Gewichtskraft des Andruckelementes (14) ist.
